(19) Europäisches Patentamt
European Patent Office
Office européen des brevets

(11) **EP 3 022 074 B1**

(12) **FASCICULE DE BREVET EUROPEEN**

(45) Date de publication et mention
de la délivrance du brevet:
**28.06.2017 Bulletin 2017/26**

(21) Numéro de dépôt: **14755860.5**

(22) Date de dépôt: **11.07.2014**

(51) Int Cl.:
***B60G 17/08*** (2006.01)     ***B60G 17/016*** (2006.01)
***B60Q 1/115*** (2006.01)     ***B60G 17/0195*** (2006.01)
***G01G 19/02*** (2006.01)

(86) Numéro de dépôt international:
**PCT/FR2014/051784**

(87) Numéro de publication internationale:
**WO 2015/007981 (22.01.2015 Gazette 2015/03)**

(54) **GESTION D'UN SYSTEME D'AMORTISSEMENT DE VEHICULE AUTOMOBILE**

VERWALTUNG EINES KRAFTFAHRZEUG-DÄMPFUNGSSYSTEMS

MOTOR VEHICLE DAMPING SYSTEM MANAGEMENT

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **17.07.2013 FR 1357006**

(43) Date de publication de la demande:
**25.05.2016 Bulletin 2016/21**

(73) Titulaire: **Renault S.A.S.
92100 Boulogne-Billancourt (FR)**

(72) Inventeurs:
• **AMARA, Sofiane**
**F-75013 Paris (FR)**
• **BEY, Mehdi**
**F-91680 Bruyere le Chatel (FR)**
• **PLICHET, Roger**
**F-27340 Pont de L'arche (FR)**
• **GOSSELIN, Eric**
**F-78114 Magny les Hameaux (FR)**
• **VENUS, Romain**
**F-91300 Massy (FR)**

(56) Documents cités:
**EP-A1- 1 470 941      DE-A1- 10 115 808
FR-A1- 2 683 186      FR-A1- 2 780 779
FR-A1- 2 794 067      FR-A3- 2 957 306
JP-A- H02 106 418      JP-A- H06 147 963
US-A1- 2012 323 444**

**Description**

L'invention concerne la gestion d'un système d'amortissement de véhicule automobile.

Il est connu de piloter l'amortissement au niveau d'une roue en fonction d'une valeur de charge exercée sur cette roue. Le document EP 1 470 941 décrit un exemple d'un tel procédé. La valeur de charge exercée sur une roue donnée peut être estimée à partir d'une mesure de hauteur de débattement pour cette roue.

Il a été envisagé de mesurer quatre valeurs de débattement et de piloter l'amortissement roue par roue de façon à maintenir chacune de ces valeurs ainsi que leurs dérivées premières et secondes dans des plages de valeurs respectives.

Il existe un besoin pour un système d'amortissement plus simple.

Il est proposé un procédé de gestion d'un système d'amortissement de véhicule automobile comprenant :

- recevoir au moins une valeur de hauteur mesurée par au moins un capteur de débattement installé sur le véhicule,
- estimer un état de charge du véhicule en fonction de cette au moins une valeur mesurée, et
- élaborer un signal de commande de système d'amortissement en fonction de cet état de charge estimé.

Ainsi, contrairement à l'art antérieur dans lequel on pilote l'amortissement roue par roue en fonction de valeurs de charge estimées pour ces roues respectives, on commande ici le système d'amortissement en fonction d'une seule valeur d'état de charge du véhicule, commune à l'ensemble des roues. Un exemple d'un tel système est décrit dans le document JP H02 106418 A. Ce procédé peut ainsi être basé sur un nombre de valeurs de hauteur moindres. En particulier, ce procédé peut permettre d'utiliser moins de capteurs que dans l'art antérieur.

Ainsi le système d'amortissement peut comprendre moins de capteurs de débattement que dans l'art antérieur, voire être dénué de capteurs dédiés, et être donc plus simple à l'art antérieur.

Dans le mode de réalisation, le ou les capteurs de débattement font partie d'un système de gestion de l'orientation des projecteurs du véhicule, en particulier des projecteurs avant. Ainsi on vient utiliser des capteurs initialement prévus pour une autre application, afin d'estimer un état de charge et de piloter l'amortissement du véhicule.

Dans le mode de réalisation, on prévoit de recevoir une ou des valeurs de hauteur mesurées par un seul capteur de débattement. Alternativement, dans un mode de réalisation avantageux, on reçoit des valeurs de hauteur mesurées par exactement deux capteurs de débattement.

Alternativement, on pourrait prévoir de recevoir des valeurs de hauteur mesurées par plus de deux capteurs de débattement, par exemple par trois ou par quatre capteurs de débattement.

Utiliser deux capteurs, voire davantage, peut permettre une estimation plus précise de la charge. En effet, utiliser un seul capteur de débattement pour estimer la charge revient en quelque sorte à négliger les variations relatives du débattement d'une roue à l'autre, et en particulier entre l'avant et l'arrière du véhicule.

Dans un mode de réalisation avantageux, on reçoit des valeurs de hauteur issues d'un capteur de débattement des roues avant du véhicule et des valeurs de hauteur issues d'un capteur de débattement à l'arrière du véhicule.

Avantageusement et de façon non limitative, le procédé décrit ci-dessus est effectué en cours de roulage. En particulier, on reçoit des valeurs de hauteur mesurées en cours de roulage à des fins d'estimation de l'état de charge du véhicule. De telles mesures en cours de roulage peuvent en effet s'avérer plus pertinentes que des valeurs de mesure à l'arrêt. En effet, une mesure à l'arrêt alors que le véhicule n'est pas tout à fait à plat, par exemple lorsque le véhicule est garé sur un trottoir, sur une pente ou autre, risque de conduire à une estimation relativement erronée, en particulier lorsque le nombre de capteurs impliqué pour ces mesures est relativement faible. Selon l'invention, on prévoit de recevoir plusieurs valeurs de hauteur pour chaque capteur de débattement utilisé, et on peut prévoir pour chaque capteur une étape de filtrage des valeurs de hauteur mesurées par ce capteur, par exemple une étape de filtrage passe-bas, par exemple du $1^{er}$ ordre ou autre, un filtre moyenneur, ou autre. Cette étape peut permettre d'estimer l'état de charge du véhicule de façon relativement précise. Selon l'invention, on prévoit une étape de détection d'un jeu d'au moins une situation d'inclinaison d'assiette du véhicule.

Ce jeu de situations d'inclinaison d'assiette peut par exemple comprendre :

- une situation de virage, basée par exemple sur une détection de ce qu'une valeur d'accélération transversale du véhicule est supérieure à un seuil prédéterminé ;
- une situation de pente, basée par exemple sur la détection de ce qu'une valeur d'accélération longitudinale du véhicule est supérieure à un seuil prédéterminé ;
- une situation de freinage, basée par exemple sur une valeur de consigne de freinage du véhicule ; et/ou
- une situation d'accélération, laquelle peut être détectée à partir d'une valeur d'accélération du véhicule mesurée.

Selon l'invention, on prévoit de s'abstenir de prendre en compte les valeurs de hauteur mesurées alors qu'une situation d'inclinaison d'assiette a été détectée. Dit autrement on conditionne la prise en compte des valeurs de hauteur mesurées à l'absence de détection d'une situation particulière. En effet, lorsque le véhicule est dans un virage, dans une pente, et/ou avec une accélération ou un freinage trop élevé, les valeurs de hauteur issues de seulement un ou deux capteurs de débattement risquent de conduire à une estimation de l'état de charge erronée ou relativement peu précise. Selon l'invention, le procédé comprend en outre une étape d'estimation d'une valeur de paramètre représentatif de la charge, en fonction de ladite au moins une valeur de hauteur reçue, par exemple en fonction d'une valeur de hauteur filtrée obtenue par filtrage passe-bas d'une pluralité de valeurs de hauteur mesurées par un capteur de débattement.

Avantageusement et de façon non limitative, la valeur du paramètre représentatif de la charge peut être en outre fonction d'un paramètre de flexibilité de la suspension, par exemple une valeur de raideur de suspension, ou autre. Selon l'invention, l'état de charge du véhicule automobile est estimé en fonction de la valeur du paramètre représentatif de la charge. On prévoit d'estimer une valeur d'un paramètre d'état de charge par une variable booléenne, cette variable prenant une première valeur lorsque la charge du véhicule est considérée comme basse et une deuxième valeur lorsque la charge du véhicule est considérée comme élevée. Selon l'invention, on prévoit de comparer la valeur du paramètre représentatif de la charge à au moins un seuil et d'estimer la valeur de ce paramètre d'état de charge, par exemple cette variable booléenne, en fonction du résultat de la comparaison.

Dans un mode de réalisation avantageux, le seuil est choisi en fonction de la valeur courante du paramètre d'état de charge. En particulier on pourra prévoir de mettre en place une hystérésis afin de garantir une certaine stabilité dans l'estimation de cette valeur de paramètre d'état de charge du véhicule. Selon l'invention, on prévoit un filtrage des valeurs de paramètre d'état de charge estimées. Par exemple, on peut prévoir qu'en cas de changement d'état, on refuse de prendre en compte une telle nouvelle valeur d'état de charge si cette valeur n'est pas stable pendant une durée donnée. Cette durée peut être en particulier supérieure à 1 seconde et inférieure à 20 secondes afin de bénéficier d'une détection rapide d'un changement réel de charge. Cette plage peut en particulier permettre d'éviter de prendre en compte des valeurs d'état de charge obtenues du fait des déformations du profil de la route. Dit autrement, on élimine les variations trop rapides de ce paramètre d'état de charge du véhicule.

Alternativement, on peut aussi prévoir de mettre en oeuvre un algorithme de détection des mauvaises routes, mais le deuxième filtrage proposé reste plus simple à mettre en oeuvre, et plus réactif en termes de résultats.

Il est en outre proposé un produit programme d'ordinateur comprenant des instructions pour effectuer les étapes du procédé décrit ci-dessus lorsque ce programme est exécuté par un processeur.

Le procédé de gestion décrit ci-dessus peut ainsi être mis en oeuvre par des moyens numériques de traitement, par exemple un microprocesseur, un microcontrôleur ou autre.

Il est en outre proposé un dispositif de gestion d'un système d'amortissement de véhicule automobile comprenant des moyens de réception, par exemple un port d'entrée, une broche d'entrée ou autre, pour recevoir au moins une valeur de hauteur mesurée par au moins un capteur de débattement installé sur le véhicule, et des moyens de traitement, par exemple un coeur de processeur ou autre, pour estimer un état de charge du véhicule en fonction de ladite au moins une valeur mesurée, et élaborer un signal de commande de système d'amortissement en fonction de cet état de charge estimé.

Ce dispositif peut par exemple comprendre ou être intégré dans un ou plusieurs processeurs.

Il est en outre proposé un véhicule automobile comprenant un dispositif de gestion tel que décrit ci-dessus, ainsi que le ou les capteurs de débattement.

L'invention sera mieux comprise en référence aux figures lesquelles illustrent des modes de réalisation donnés à titre d'exemple et non limitatifs.

La figure 1 montre un exemple de véhicule automobile selon un mode de réalisation de l'invention.

La figure 2 représente schématiquement un exemple de dispositif selon un mode de réalisation de l'invention.

La figure 3A est un graphique avec en abscisse le temps en secondes et en ordonnée des valeurs de déplacement reçues, ainsi que des valeurs de déplacement filtrées, en millimètres, lors de l'exécution d'un exemple de procédé selon un mode de réalisation de l'invention.

La figure 3B est un graphique avec en abscisse le temps en secondes et en ordonnée des valeurs d'un paramètre représentatif de la charge estimées à partir des valeurs de déplacement issues d'un capteur de débattement arrière, ainsi que des valeurs du paramètre représentatif de la charge estimées à partir de valeurs de déplacement issues de ce capteur arrière et de valeurs de déplacement issues d'un capteur supplémentaire, lors de l'exécution d'un exemple de procédé selon un mode de réalisation de l'invention.

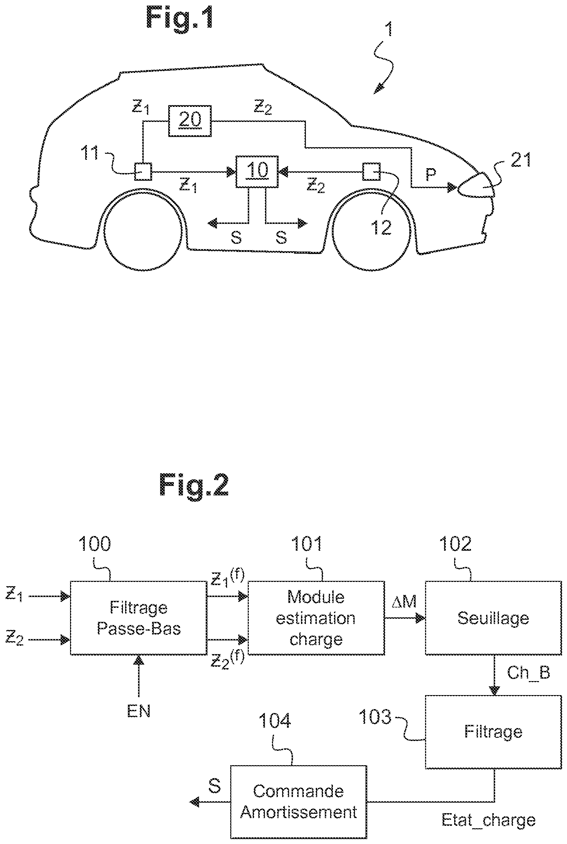

En référence à la figure 1, un véhicule automobile 1 comprend un système de gestion de l'orientation des projecteurs avant 21, comprenant par exemple un processeur 20, des capteurs de débattement 11, 12 et des actionneurs non représentés de ces projecteurs 21. Ce processeur 20 est en communication avec les deux capteurs de débattement 11, 12, les capteurs de débattement 11, 12 permettant d'obtenir respectivement des valeurs $z_1$, $z_2$ de hauteur des essieux arrière et avant, non représentés, par rapport aux roues respectives.

Ces valeurs $z_1$ et $z_2$ sont transmises au processeur 20, et le processeur 20 génère un signal P de commande de l'orientation des projecteurs avant 21. Ce processeur 20, du type connu en soi, permet ainsi d'adapter l'orientation des projecteurs avant 21 lorsque le véhicule a une assiette légèrement inclinée du fait d'une surcharge arrière par exemple.

Le véhicule 1 comprend en outre un dispositif de gestion d'un système d'amortissement, par exemple un autre processeur 10. Ce processeur 10 élabore un signal S de commande de l'amortissement destiné à un système d'amortissement non représenté et du type connu en soi. Ce processeur 10 est en communication avec les capteurs de déplacement 11, 12 et reçoit des valeurs de hauteur mesurées $z_1$, $z_2$, à partir de ces capteurs 11, 12.

La figure 2 montre de façon plus détaillée un schéma du dispositif de gestion de l'amortissement, ce dispositif permettant de générer un signal de commande à partir de valeurs de hauteur mesurées $z_1$, $z_2$, par deux capteurs respectifs.

Le dispositif comprend ainsi des moyens de réception non représentés de valeur de hauteur $z_1$, $z_2$ mesurées par les capteurs 11, 12 respectifs, par exemple un port d'entrée, une broche d'entrée ou autre.

Ces valeurs $z_1$, $z_2$ sont reçues dans un module 100 agencé pour effectuer deux filtrages passe-bas respectifs. On effectue ainsi un filtrage des valeurs de hauteur reçues pour chacun des capteurs. Ce module 100 permet ainsi d'obtenir des valeurs de hauteur filtrées $z_1^{(f)}, z_2^{(f)}$.

Ce module 100 reçoit en outre une valeur d'une variable booléenne EN d'autorisation de prise en compte des valeurs de hauteur $z_1$, $z_2$. Cette valeur de variable booléenne EN est par exemple égale à 1 en cas de détection d'une situation d'inclinaison d'assiette du véhicule, par exemple en cas de détection de ce que le véhicule est actuellement dans une phase d'accélération relativement forte, dans une phase de freinage, dans un virage, en pente ou autre. Dit autrement, on détecte les situations de roulage au cours desquelles des capteurs de débattement 11, 12 sont susceptibles de mesurer des valeurs de hauteur relativement peu pertinentes quant à la charge du véhicule puisque de fait ces valeurs de hauteur sont affectées par cette situation particulière.

Le module 100 est agencé de sorte que lorsque le signal EN a une valeur égale à 1, c'est-à-dire en cas de détection d'une situation d'inclinaison d'assiette du véhicule, les valeurs générées par ce module 100 soient choisies égales à la dernière valeur générée alors que le signal EN était à zéro. Dit autrement, on ne prend pas en compte les valeurs de hauteur $z_1$, $z_2$ mesurées alors que l'on a détecté une situation d'inclinaison d'assiette.

A contrario, en l'absence de détection d'une telle situation d'assiette, la variable booléenne EN a une valeur par exemple égale à zéro, et le module 100 détermine les valeurs $z_1^{(f)}, z_2^{(f)}$ à partir d'un ensemble de valeurs de hauteur $z_1$, $z_2$, mesurées au cours d'un ensemble d'instants précédents respectifs.

Le dispositif comporte en outre un module 101 d'estimation de la charge, ce module étant agencé pour estimer une charge $\Delta M$ à partir des valeurs de hauteur filtrées $z_1^{(f)}, z_2^{(f)}$ générées par le module 100.

Ainsi l'information quant au débattement est transmise à chaque instant en cours de roulage, et le filtrage passe-bas effectué par le module 100 peut permettre d'éliminer d'éventuelles perturbations dynamiques dues aux déformations du profil de la route. Dit autrement, ce filtrage peut permettre d'identifier la part statique du débattement de la suspension.

En outre, l'autorisation du calcul est conditionnée à l'absence de détection d'une situation d'inclinaison d'assiette.

On pourrait aussi prévoir de conditionner la prise en compte de valeurs mesurées à la détection d'une situation pour laquelle ces valeurs mesurées sont de prime abord pertinentes, par exemple des situations de ligne droite, sans accélération longitudinale excessive, sans virage, avec une vitesse supérieure à un seuil, une pente relativement faible, etc.

Le module destination de la charge 101 permet d'estimer une variation de masse $\Delta M$ du véhicule par rapport à une masse initiale prédéterminée, en fonction des valeurs $z_1^{(f)}, z_2^{(f)}$ et en fonction d'une valeur d'un paramètre de raideur de suspension. Cette valeur de paramètre de raideur est prédéterminée et peut permettre une estimation relativement précise de la variation de masse $\Delta M$.

Ce module d'estimation de la charge 101 peut ainsi mettre en oeuvre un procédé du type bien connu de l'homme du métier.

Un module de seuillage 102 est agencé pour comparer cette valeur de charge $\Delta M$ à un seuil, ce seuil étant lui-même fonction d'une valeur d'une variable booléenne d'état charge Ch_B issue de ce module de seuillage 102.

Lorsque la variable booléenne d'état de charge Ch_B a une valeur indiquant que la charge est relativement faible, le seuil utilisé dans le module 102 peut être plus élevé que lorsque la valeur courante de cette variable booléenne Ch_B indique que le véhicule a une charge relativement élevée.

Dit autrement, le module 102 est agencé pour effectuer un seuillage avec une hystérésis, et ce afin de limiter les variations de cette valeur d'état de charge Ch_B.

Le module 102 est agencé pour générer un signal booléen Ch_B en fonction du résultat de la comparaison. Si la valeur $\Delta M$ est supérieure au seuil choisi, alors le signal Ch_B a par exemple une valeur égale à 1, tandis que si la valeur $\Delta M$ est inférieure au seuil courant, alors le signal Ch_B a une valeur égale à 0, par exemple.

Un module 103 permet d'effectuer un filtrage du signal Ch_B, afin d'éviter de courtes variations de ce signal Ch_B. Ces courtes variations sont par exemple susceptibles de se produire lorsque le véhicule roule sur une route relativement mauvaise.

Sur une route particulièrement sollicitante, le signal Ch_B est en effet susceptible de présenter de courtes variations liées à la présence courante d'un obstacle de type pierre ou autre. Le module de filtrage 103 peut permettre d'éliminer ces courtes variations relativement peu significatives quant à l'état de charge du véhicule.

On peut par exemple prévoir de s'abstenir de prendre en compte les variations du signal Ch_B lorsque ces variations ont une durée inférieure à un seuil, par exemple, 10 secondes, 20 secondes, ou autre. Le module de filtrage 103 peut par exemple être agencé de façon à déclencher un compteur à chaque variation du signal Ch_B, et à changer la valeur du signal Etat_charge généré par ce module 103, seulement si le signal Ch_B est resté à la même valeur pendant une durée prédéterminée, par exemple choisie entre 5 secondes et 30 secondes.

Ainsi, sur les routes relativement sollicitantes, pour laquelle les valeurs mesurées de débattement peuvent présenter des variations relativement importantes, ce module 103 peut permettre de rendre la détection de variation de charge plus robuste, et en particulier d'éliminer les courtes périodes de variation d'état de charge, liées par exemple à des bosses isolées entraînant un débattement de la suspension. On évite ainsi que le passage du véhicule sur une bosse isolée conduise à la détection temporaire d'un état non chargé.

Cette structure de dispositif, avec d'une part un filtrage passe-bas des valeurs de hauteur mesurées, une désactivation en cas de détection de situation d'inclinaison d'assiette, puis un filtrage des valeurs d'état de charge obtenues, peut permettre de concilier robustesse et réactivité.

Le dispositif comporte en outre un module 104 de commande d'amortissement, agencé de façon à élaborer un signal de commande de l'amortissement S pour l'ensemble des roues, en fonction de l'état de charge issu du module 103. De la valeur du signal S peut en particulier dépendre la raideur de suspension du système d'amortissement.

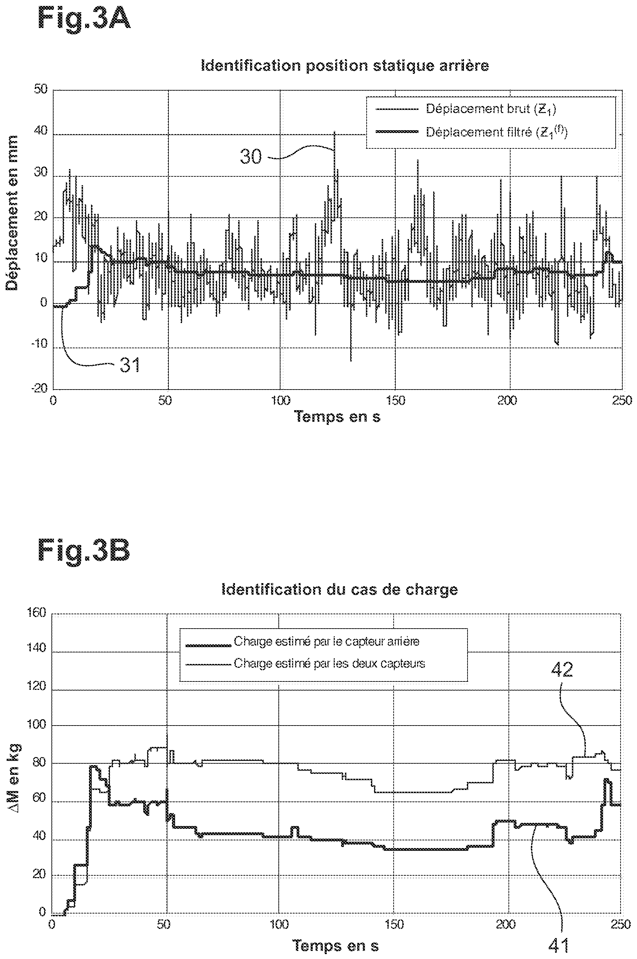

En référence à la figure 3A, la courbe 30 correspond à des valeurs de hauteur issues d'un capteur de débattement situé à l'arrière du véhicule. La courbe 31 correspond à des valeurs de déplacement filtrées telles que susceptibles d'être générées par le module 100 de la figure 2 lorsque ce module reçoit en entrée les valeurs correspondant à la courbe 30.

Comme on peut le constater, ces valeurs filtrées varient beaucoup moins que les valeurs mesurées, en particulier, certains pics, comme par exemple le pic autour de t=120 secondes, ne sont pas pris en compte, probablement car mesurées alors que le véhicule est dans un état d'inclinaison d'assiette de type virage ou autre.

On pourra relever que le signal EN de la figure 2 a une valeur égale à 1 aussi lorsque la vitesse est inférieure à un seuil bas, c'est-à-dire que l'estimation de la charge a lieu seulement lorsque le véhicule est en roulage.

En référence à la figure 3B, la courbe 41 correspond à des valeurs de charge, en kilogrammes, estimées à partir de valeurs de hauteur mesurées par le capteur de débattement arrière seulement. La courbe 42 correspond à des valeurs de charge, en kilogrammes, estimées à partir des valeurs de débattement issues d'un capteur arrière et d'un capteur avant.

Le module 101 de la figure 2 peut en effet être agencé de façon à réaliser des calculs d'estimation de charge différents selon que ce module reçoit des valeurs de débattement issues d'un seul capteur ou de deux capteurs.

Ainsi, la configuration du calcul peut être détectée automatiquement en fonction de la présence ou non du signal de débattement d'un deuxième capteur. Le dispositif s'adapte ainsi automatiquement à une configuration un capteur ou deux capteurs. Dans le cas de prise en compte de valeurs de hauteur issues d'un seul capteur, on pourra choisir de prendre en compte un capteur avant ou arrière, en fonction par exemple des possibilités d'implantation. Toutefois la prise en compte de valeurs issues de deux capteurs peut permettre d'obtenir une meilleure précision quant à l'estimation de la charge.

Dans l'exemple de la figure 3B, la charge réelle du véhicule est de 80 kilogrammes, et il ressort que la courbe 42 est bien plus proche de cette valeur réelle que la courbe 41.

D'autres mesures ont conduit à évaluer la précision de l'estimation de la charge dans le cas d'une configuration à deux capteurs à ± 25 kilos, et à ± 35 kilos dans le cas d'une configuration à capteur unique.

Le module 102 peut par exemple être agencé pour effectuer des comparaisons d'une valeur de charge globale, elle-même estimée à partir de la valeur $\Delta M$ et d'une valeur de masse prédéterminée, à deux seuils, de façon à former une hystérésis. Le premier seuil peut par exemple être choisi égal à 140 kg, tandis que le deuxième seuil peut être choisi égal à 160 kg.

Dans cet exemple, les valeurs de charges, qu'elles soient estimées avec un ou deux capteurs, restent en-deçà du seuil de 60 kg, de sorte que les variables booléennes à Ch_B et Etat_charge seront représentatives d'un état de décharge.

Cette estimation de l'état de charge Etat_charge du véhicule peut permettre d'adapter au mieux le réglage des amortisseurs pilotés afin d'obtenir de relativement bonnes performances en terme de confort et de comportement.

On pourra avantageusement prévoir d'utiliser des valeurs estimées par le dispositif 10 à d'autres fins que la commande de l'amortissement. Par exemple ces valeurs, et en particulier la valeur de charge estimée, peuvent être utilisées à des fins d'alerte au conducteur en cas de surcharge du véhicule. La valeur de charge estimée peut en outre être prise en compte pour un système de freinage, pour une boîte de vitesse automatique afin d'optimiser les passages de vitesse, pour le contrôle moteur afin d'optimiser la consommation d'énergie, pour des systèmes de régulation de la distance et de la vitesse, du type ACC ou autre, pour des systèmes de suspension actifs, permettant de corriger l'assiette du véhicule en fonction de la charge et de sa répartition, pour le contrôle de la pression des pneumatiques et autre.

**Revendications**

1. Dispositif de gestion d'un système d'amortissement de véhicule automobile comprenant :

   des moyens de réception pour recevoir au moins une valeur de hauteur ($z_1$, $z_2$) mesurée par au moins un capteur de débattement installé sur le véhicule, et
   des moyens de traitement (100, 101, 102, 103, 104) pour

   - filtrer, par un module de filtrage passe-bas (100) les valeurs de hauteurs ($z_1$, $z_2$) reçues, afin de ne pas prendre en compte les valeurs de hauteur mesurées lorsqu'une situation d'inclinaison d'assiette a été détectée,
   - estimer, par un module d'estimation de charge (101), un paramètre représentatif de la charge ($\Delta M$) en fonction des valeurs de hauteur ($z_1$, $z_2$) filtrées reçues,
   - comparer, par un module de seuillage (102), le paramètre représentatif de la charge à un seuil, le résultat de cette comparaison prenant une valeur booléenne,
   - filtrer, par un module 103, le résultat de cette comparaison, afin d'éviter les courtes variations du signal,
   - estimer un état de charge du véhicule en fonction du résultat filtré de la comparaison,
   - et élaborer, par un module 104, un signal de commande de système d'amortissement en fonction de cet état de charge estimé.

2. Véhicule automobile (1) comprenant un dispositif de gestion (10) d'un système d'amortissement selon la revendication 1, et au moins un capteur de débattement (11, 12).

3. Véhicule automobile (1) selon la revendication 2, dans lequel au moins un capteur de débattement (11, 12) est en communication en outre avec un dispositif de gestion (20) de l'orientation de projecteurs (21) du véhicule.

4. Procédé de gestion d'un système d'amortissement de véhicule automobile comprenant :

   - recevoir au moins une valeur de hauteur ($z_1$, $z_2$) mesurée par au moins un capteur de déplacement installé sur le véhicule,
   - filtrer les valeurs de hauteurs ($z_1$, $z_2$) reçues, afin de ne pas prendre en compte les valeurs de hauteur mesurées lorsqu'une situation d'inclinaison d'assiette a été détectée,
   - estimer un paramètre représentatif de la charge ($\Delta M$) en fonction des valeurs de hauteur ($z_1$, $z_2$) filtrées reçues,
   - comparer le paramètre représentatif de la charge à un seuil, le résultat de cette comparaison prenant une valeur booléenne,
   - filtrer le résultat de cette comparaison, afin d'éviter les courtes variations du signal,
   - estimer un état de charge du véhicule en fonction du résultat filtré de la comparaison,
   - et élaborer un signal de commande de système d'amortissement (S) en fonction de cet état de charge estimé.

5. Procédé selon la revendication 4, dans lequel on reçoit des valeurs de hauteur ($z_1$, $z_2$) mesurées par deux capteurs de débattement.

6. Procédé selon l'une quelconque des revendications 4 ou 5, dans lequel ladite au moins une valeur de hauteur reçue est mesurée en cours de roulage.

7. Procédé selon l'une quelconque des revendications 4 à 6, **caractérisé en ce que** la situation d'inclinaison d'assiette du véhicule comprend au moins une situation choisie parmi une situation de virage, de pente, de freinage, d'accélération.

**Patentansprüche**

1. Vorrichtung zur Verwaltung eines Kraftfahrzeug-Dämpfungssystems, aufweisend:

   Empfangsmittel, um mindestens einen Höhenwert ($z_1$, $z_2$) zu empfangen, welcher von mindestens einem an dem Fahrzeug installierten Auslenksensor gemessen wird, und Verarbeitungsmittel (100, 101, 102, 103, 104), um

   - die empfangenen Höhenwerte ($z_1$, $z_2$) durch ein Tiefpass-Filtermodul (100) zu filtern, um nicht die gemessenen Höhenwerte zu berücksichtigen, wenn eine Situation mit einer Lagenneigung erfasst worden ist,

- einen Parameter, welcher der Last (AM) entspricht, in Abhängigkeit von empfangenen, gefilterten Höhenwerten ($z_1$, $z_2$) durch ein Last-Abschätzungsmodul (101) abzuschätzen,

- den Parameter, welcher der Last entspricht, durch ein Schwellwert-Modul (102) mit einem Schwellwert zu vergleichen, wobei das Ergebnis dieses Vergleichs einen Bool'schen Wert ergibt,

- das Ergebnis dieses Vergleichs durch ein Modul (103) zu filtern, um schnelle Schwankungen des Signals zu vermeiden,

- einen Lastzustand des Fahrzeugs in Abhängigkeit des gefilterten Ergebnisses des Vergleichs abzuschätzen,

- und ein Signal zum Steuern des Dämpfungssystems in Abhängigkeit dieses geschätzten Lastzustands durch ein Modul (104) zu erstellen.

2. Kraftfahrzeug (1), aufweisend eine Vorrichtung zur Verwaltung (10) eines Dämpfungssystems nach Anspruch 1 und zumindest einen Auslenksensor (11, 12).

3. Kraftfahrzeug (1) nach Anspruch 2, bei welchem zumindest ein Auslenksensor (11, 12) außerdem mit einer Vorrichtung zur Verwaltung (20) der Ausrichtung von Scheinwerfern (21) des Fahrzeugs in Verbindung steht.

4. Verfahren zur Verwaltung eines Kraftfahrzeug-Dämpfungssystems, aufweisend:

- Empfangen von mindestens einem Höhenwert ($z_1$, $z_2$), welcher von mindestens einem an dem Fahrzeug installierten Verschiebungssensor gemessen wird,

- Filtern der empfangenen Höhenwerte ($z_1$, $z_2$), um nicht die gemessenen Höhenwerte zu berücksichtigen, wenn eine Situation mit einer Lagenneigung erfasst worden ist,

- Abschätzen eines Parameters, welcher der Last ($\Delta M$) entspricht, in Abhängigkeit von dem empfangenen, gefilterten Höhenwerten ($z_1$, $z_2$),

- Vergleichen des Parameters, welcher der Last entspricht, mit einem Schwellenwert, wobei das Ergebnis dieses Vergleichs einen Bool'schen Wert ergibt,

- Filtern des Ergebnisses dieses Vergleichs, um schnelle Schwankungen des Signals zu vermeiden,

- Abschätzen eines Lastzustands des Fahrzeugs in Abhängigkeit des gefilterten Ergebnisses des Vergleichs,

- und Erstellen eines Signals zum Steuern des Dämpfungssystems (S) in Abhängigkeit dieses geschätzten Lastzustands.

5. Verfahren nach Anspruch 4, bei welchem Höhenwerte ($z_1$, $z_2$) empfangen werden, welche von zwei Auslenksensoren gemessen werden.

6. Verfahren nach einem der Ansprüche 4 oder 5, bei welchem der zumindest eine empfangene Höhenwert im Verlauf des Fahrens gemessen wird.

7. Verfahren nach einem der Ansprüche 4 bis 6, **dadurch gekennzeichnet, dass** die Situation mit einer Lagenneigung des Fahrzeugs zumindest eine Situation aufweist, welche aus einer Kurven-, Hang-, Brems- und Beschleunigungssituation ausgewählt wird.

**Claims**

1. Device for managing a motor vehicle damping system comprising:

reception means for receiving at least one height value ($z_1$, $z_2$) measured by at least one clearance sensor installed on the vehicle, and processing means (100, 101, 102, 103, 104) for

- filtering, using a low-pass filtering module (100), the height values ($z_1$, $z_2$) received, in order not to take into account the height values measured when a trim inclination situation has been detected,

- estimating, using a load estimation module (101), a parameter representative of the load ($\Delta M$) as a function of the filtered height values ($z_1$, $z_2$) received,

- comparing, using a thresholding module (102), the parameter representative of the load to a threshold, the result of this comparison taking a Boolean value,

- filtering, using a module 103, the result of this comparison, in order to avoid the short signal variations,

- estimating a load state of the vehicle as a function of the filtered result of the comparison,

- and generating, using a module 104, a damping system control signal on the basis of this estimated load state.

2. Motor vehicle (1) comprising a damping system management device (10) according to Claim 1, and at least one clearance sensor (11, 12).

3. Motor vehicle (1) according to Claim 2, in which at least one clearance sensor (11, 12) is in communication also with a device (20) for managing the orientation of headlights (21) of the vehicle.

4. Method for managing a motor vehicle damping system comprising:

- receiving at least one height value ($z_1$, $z_2$) measured by at least one displacement sensor installed on the vehicle,
- filtering the height values ($z_1$, $z_2$) received, in order not to take into account the height values measured when a trim inclination situation has been detected,
- estimating a parameter representative of the load ($\Delta M$) as a function of the filtered height values ($z_1$, $z_2$) received,
- comparing the parameter representative of the load to a threshold, the result of this comparison taking a Boolean value,
- filtering the result of this comparison, in order to avoid the short signal variations,
- estimating a load state of the vehicle as a function of the filtered result of the comparison,
- and generating a damping system control signal (S) on the basis of this estimated load state.

5. Method according to Claim 4, in which height values ($z_1$, $z_2$) measured by two clearance sensors are received.

6. Method according to either one of Claims 4 or 5, in which said at least one received height value is measured while the vehicle is being driven.

7. Method according to any one of Claims 4 to 6, **characterized in that** the vehicle trim inclination situation comprises at least one situation chosen from a turning, gradient, braking, acceleration situation.

# Fig.1

# Fig.2

## Fig.3A

**Identification position statique arrière**

## Fig.3B

**Identification du cas de charge**

**EP 3 022 074 B1**

## RÉFÉRENCES CITÉES DANS LA DESCRIPTION

**Documents brevets cités dans la description**

- EP 1470941 A

- JP H02106418 A